# EUROPÄISCHE PATENTSCHRIFT

(11) **EP 1 531 642 B1**
(45) Veröffentlichungstag und Bekanntmachung des Hinweises auf die Patenterteilung: **16.06.2010**
(21) Anmeldenummer: 04026665.2
(22) Anmeldetag: 10.11.2004
(51) Int. Cl.: H04W 4/22

(54) **Konfiguration von mobilen Endgeräten in Mobilfunknetzen**
Configuring mobile terminals in mobile networks
Configurer un terminal mobile dans un réseau mobile

(30) Priorität: 13.11.2003 DE 10353194
(43) Veröffentlichungstag der Anmeldung: 18.05.2005
(73) Patentinhaber: Vodafone Holding GmbH, 40213 Düsseldorf (DE)
(72) Erfinder: Georg, Tobias, 40235 Düsseldorf (DE)
(74) Vertreter: Weisbrodt, Bernd

(56) Entgegenhaltungen:
- EP-A2- 0 869 691
- WO-A-02/49373
- WO-A-03/032664
- "Digital cellular telecommunications system (Phase 2+)" ETSI STANDARDS, EUROPEAN TELECOMMUNICATIONS STANDARDS INSTITUTE, SOPHIA-ANTIPO, FR, Bd. 3-T3;SMG9, Nr. V830, August 2000 (2000-08), Seiten 1-136, XP014015919 ISSN: 0000-0001

## Beschreibung

Die vorliegende Erfindung betrifft ein Verfahren zur Konfiguration von mobilen Endgeräten in Mobilfunknetzen zur Aktivierung von Funktionalitäten eines mobilen Endgerätes zur Nutzung von auswählbaren Mobilfunknetzdiensten eines Mobilfunknetzbetreibers, wobei nach einer mittels eines Mobilfunknetzdienstes über ein Mobilfunknetz von dem mobilen Endgerät an einen Mobilfunknetzbetreiber gerichteten Aktivierungsanforderung, welche das mobile Endgerät identifizierende Daten und den Nutzer des mobilen Endgerätes identifizierende Daten enthält, über das Mobilfunknetz von dem Mobilfunknetzbetreiber Konfigurationsinformationen zur Aktivierung von Funktionalitäten des mobilen Endgerätes zur Nutzung von entsprechend der Aktivierungsanforderung ausgewählter Mobilfunknetzdienste des Mobilfunknetzbetreibers auf das mobile Endgerät übertragen werden und das mobile Endgerät entsprechend der Aktivierungsanforderung funktionalisiert wird, wobei die den Nutzer des mobilen Endgerätes identifizierenden Daten aus dem dem Nutzer von dem Mobilfunknetzbetreiber zur Verfügung gestellten kartenförmigen Mobilfunkteilnehmer-Identifikations-Modul (SIM-Karte bzw. USIM-Karte (Universal Subscriber Indentification Module)) extrahiert werden. Ferner betrifft die vorliegende Erfindung ein zur Ausführung des Verfahrens ausgebildetes mobiles Endgerät.

Es ist bekannt mobile Endgeräte zur Nutzung von von Mobilfunknetzbetreibern angebotenen auswählbaren Mobilfunknetzdiensten wie Kurzmitteilungsdiensten (SMS), Multimedia-Mitteilungsdiensten (MMS), WAP, Anrufbeantworter (Sprachmailbox) oder dergleichen Diensten mittels manueller Eingabe von entsprechenden Daten und/oder Befehlen seitens des mobilen Endgerätes zu konfigurieren. Bisher muss sich der Nutzer dazu die erforderlichen Daten und/oder Befehle auf relativ umständliche Art und Weise beschaffen, beispielsweise über das Internet, durch Anrufen einer Hotline oder dergleichen. Erschwert wird diese Beschaffung der erforderlichen Daten und/oder Befehle zusätzlich dadurch, dass die Befehle und/oder Daten in Abhängigkeit des mobilen Endgerätes und in Abhängigkeit des Nutzers bzw. der dem Nutzer von einem Mobilfunknetzbetreiber zur Verfügung gestellten, für den Betrieb eines mobilen Endgerätes erforderlichen kartenförmigen Mobilfunkteilnehmer-Identifikations-Moduls, der sogenannten SIM-Karte bzw. USIM-Karte, unterschiedlich sind.

Ferner ist es bekannt, Konfigurationsinformationen zur Aktivierung von Funktionalitäten eines mobilen Endgerätes mittels eines Kurzmitteilungsdienstes, einer sogenannten SMS, von einem Mobilfunknetzbetreiber an das mobile Endgerät über das Mobilfunknetz zu übertragen und so dass mobile Endgerät zu konfigurieren. Dazu muss der Nutzer vorher mittels eines Anrufs bei einer seitens des Mobilfunknetzbetreibers entsprechend eingerichteten Service-Hotline dem zuständigen Service-Personal des Mobilfunknetzbetreibers die für die von dem Nutzer gewünschte Konfiguration des mobilen Endgerätes erforderlichen Daten, insbesondere umfassend das mobile Endgerät und den Nutzer identifizierende Daten sowie die von dem Nutzer gewünschten Mobilfunknetzdienste des Mobilfunknetzbetreibers, mitteilen. Nachdem der Nutzer die Konfigurationsinformationen zur Aktivierung von Funktionalitäten des mobilen Endgerätes mittels eines Kurzmitteilungsdienstes (SMS) seitens seines mobilen Endgerätes erhalten hat, muss dieser mitunter ferner über entsprechende manuelle Eingaben seitens des mobilen Endgerätes, diese Konfigurationsinformationen aktivieren.

Derartige Konfigurationen von mobilen Endgeräten sind zuweilen bei der ersten Inbetriebnahme eines mobilen Endgerätes bzw. einer kartenförmigen Mobilfunkteilnehmer-Identifikations-Moduls (SIM-Karte bzw. USIM-Karte) und ferner bei einem Wechsel des mobilen Endgerätes oder bei einem Wechsel eines kartenförmigen Mobilfunkteilnehmer-Identifikations-Moduls (SIM-Karte bzw. USIM-Karte), beispielsweise bei einem Wechsel des Mobilfunknetzbetreibers, erforderlich. Im Stand der Technik sind derartige Konfigurationsverfahren unter dem Begriff OTA-Provisioning (Over The Air-Provisioning) bekannt.

Für die meisten Nutzer sind derartige Konfigurationen von mobilen Endgeräten zu umständlich und schwierig durchzuführen, so dass diese in der Regel von einer Konfiguration des mobilen Endgerätes und damit von einer Nutzung von mit dem mobilen Endgerät nutzbarer Mobilfunknetzdienste eines Mobilfunknetzbetreibers absehen. Für den Mobilfunknetzbetreiber sind derartige Konfigurationen von mobilen Endgeräten hinsichtlich des notwendigen Personalaufwandes äußerst kostenintensiv.

Die Offenbarung EP-A-0869691 betrifft ein GSM-Mobilfunkgerät für das zur Erweiterung seiner Funktionalität bzw. zur Steuerung über das GSM-Netz eine spezielle zusätzliche Schaltung vorgesehen ist, in welcher wenigstens eine zusätzliche Funktion für das GSM-Mobilfunkgerät abläuft, mit einem SIM-AT (-Application Toolkit), das als proaktives SIM-AT zum Anstoßen und Steuern der zusätzlichen Funktion ausgelegt ist. Nach dieser Offenbarung muss der Nutzer des mobilen Endgerätes das mobile Endgerät um eine zusätzliche Schaltung erweitern, welche er erst beziehn und mit dem mobilen Endgerät verbinden muss, bevor er zusätzliche Mobilfunkdienste des Mobilfunknetzbetreibers nutzen kann. Dies ist jedoch als nachteilig anzusehen, da der Nutzer des mobilen Endgerätes das mobile Endgerät nicht durch einen minimalen Aufwand, vorzugsweise durch Auswählen eines Menüpunktes, zur Nutzung von Mobilfunknetzdiensten des Mobilfunknetzbetreibers konfigurieren kann.

Der Erfindung liegt in Anbetracht dieses Standes der Technik die **Aufgabe** zugrunde, ein Verfahren der eingangs genannten Art unter Meidung der beschriebenen Nachteile derart zu verbessern, dass für Nutzer ein vereinfachtes Konfigurieren von mobilen Endgeräten in Mobilfunknetzen und für Mobilfunknetzbetreiber eine Reduzierung des Personalaufwandes ermöglicht wird.

Zur technischen **Lösung** dieser Aufgabe wird erfindungsgemäß vorgeschlagen, dass die Extrahierung der Daten unter Verwendung einer Anwendung seitens des kartenförmigen Mobilfunkteilnehmer-Identifikations-Moduls (SIM-Karte bzw. USIM-Karte) erfolgt.

Der Erfindung liegt die Erkenntnis zugrunde, dass die Konfiguration eines mobilen Endgerätes für den Nutzer durch eine zumindest teilautomatische Beschaffung der für die Aktivierungsanforderung erforderlichen Daten erheblich vereinfacht und damit seitens des Mobilfunknetzbetreibers eine Reduzierung des Personalaufwandes erzielt werden kann. Erfindungsgemäß wird dazu seitens des für den bestimmungsgemäßen Betrieb eines mobilen Endgerätes erforderlichen des kartenförmigen Mobilfunkteilnehmer-Identifikations-Moduls (SIM-Karte bzw. USIM-Karte) eine Anwendung, vorzugsweise in Form eines Programms, abgelegt bzw. gespeichert, welche in der Lage ist die für die Aktivierungsanforderung benötigten Daten, das heißt das mobile Endgerät identifizierende Daten und den Nutzer des mobilen Endgerätes identifizierende Daten aus dem mobilen Endgerät und dem kartenförmigen Mobilfunkteilnehmer-Identifikations-Modul (SIM-Karte bzw. USIM-Karte) zu extrahieren.

Vorteilhafterweise wird die Anwendung von dem kartenförmigen Mobilfunkteilnehmer-Identifikations-Modul (SIM-Karte bzw. USIM-Karte) ausgeführt. Dadurch kann darauf verzichtet werden, das mobile Endgerät entsprechend zur Ausführung der Anwendung seitens des mobilen Endgerätes auszubilden. Alternativ kann die erfindungsgemäße Extrahierungs-Anwendung aber auch seitens des mobilen Endgerätes ausgeführt werden, wozu dieses dann die Anwendung von dem kartenförmigen Mobilfunkteilnehmer-Identifikations-Modul (SIM-Karte bzw. USIM-Karte) ausliest und in einem entsprechenden Programmspeicher seitens des mobilen Endgerätes ausführt.

Gemäß einer vorteilhaften Ausgestaltung der Erfindung ist die Anwendung eine Mobilfunkteilnehmer-Identifikations-Modul-Anwendung (SAT (SIM Application Toolkit)). Dadurch wird es auf einfache Art und Weise ermöglicht, die Extrahierungs-Anwendung mittels eines entsprechenden Auswahlmenüs bzw. eines Menüpunktes seitens der Bedienerführung des mobilen Endgerätes ausführbar zu machen. Seitens des mobilen Endgerätes muss dazu nur ein entsprechend auswählbarer Menüpunkt seitens des Auswahlmenüs eingerichtet werden, vorteilhafterweise derart, dass für den Nutzer eine Steuerung bzw. Bedienung mit nur einer Taste ermöglicht wird. So kann die Aktivierungsanforderung von dem Nutzer überaus einfach an den Mobilfunknetzbetreiber übertragen werden, ohne dass der Nutzer aufwendige Daten oder Befehle eingeben muss. Dazu unterstützt das mobile Endgerät den entsprechenden Befehlssatz der Mobilfunkteilnehmer-Identifikations-Modul-Anwendung (SAT (SIM Application Toolkit)).

In einer weiteren vorteilhaften Ausgestaltung der Erfindung ist das kartenförmige Mobilfunkteilnehmer-Identifikations-Modul (SIM-Karte bzw. USIM-Karte) JAVA-fähig, das heißt eine sogenannte JAVA-SIM-Karte. JAVA-SIM-Karten erlauben vorteilhafterweise auf einfache Art und Weise eine schnelle Ausführung umfangreicher Anwendungen seitens der SIM-Karte bzw. USIM-Karte.

Vorteilhafterweise wird das erfindungsgemäße Verfahren bei einem Wechsel des Mobilfunknetzbetreibers und/oder bei einem Wechsel des mobilen Endgerätes angewendet.

Gemäß einem Vorschlag der Erfindung beinhalten die das mobile Endgerät identifizierenden Daten zumindest die Gerätekennung, die sogenannte IMEI des mobilen Endgerätes. Gemäß einer weiteren Ausgestaltung der Erfindung beinhalten die den Nutzer des mobilen Endgerätes identifizierenden Daten zumindest die dem Nutzer von einem Mobilfunknetzbetreiber zugeordnete netzspezifische Ruf-Nummer, die sogenannte MSISDN, oder zumindest die Mobilfunkteilnehmerkennung, die sogenannte IMSI.

Vorteilhafterweise wird die Aktivierungsanforderung mittels eines Kurzmitteilungsdienstes (SMS), eines Multimedia-Mitteilungsdienstes (MMS) oder mittels einer Spracheingabe über ein Mobilfunknetz von dem mobilen Endgerät an einen Mobilfunknetzbetreiber übertragen.

In einer vorteilhaften Ausgestaltung der Erfindung werden die Konfigurationsinformationen mittels eines Kurzmitteilungsdienstes (SMS) oder mittels eines Multimedia-Mitteilungsdienstes (MMS) über ein Mobilfunknetz von dem Mobilfunknetzbetreiber an das mobile Endgerät übertragen.

Eine weitere vorteilhafte Ausgestaltung der Erfindung sieht vor, dass die Konfigurationsinformationen das mobile Endgerät zur Nutzung von Kurzmittelungsdiensten (SMS), Multimedia-Mitteilungsdiensten (MMS), Instant-Messaging-Mitteilungsdiensten (IM) und/oder WAP-Diensten des Mobilfunknetzbetreibers funktionalisieren.

Vorteilhafterweise ist das mobile Endgerät ein Mobilfunktelefon und bevorzugt zur Ausführung des erfindungsgemäßen Verfahrens ausgebildet. Insbesondere weist die Bedienerführung des mobilen Endgerätes ein entsprechendes Auswahlmenü bzw. einen entsprechenden Menüpunkt auf, welcher eine Ausführung der Extrahierungs-Anwendung ermöglicht, vorteilhafterweise mit nur einer Taste oder dergleichen Eingabe, beispielsweise Sprachgesteuert.

Weitere Einzelheiten, Merkmale und Vorteile der Erfindung werden nachfolgend anhand des in der Zeichnung dargestellten Ausführungsbeispiels näher erläutert. Dabei zeigt:

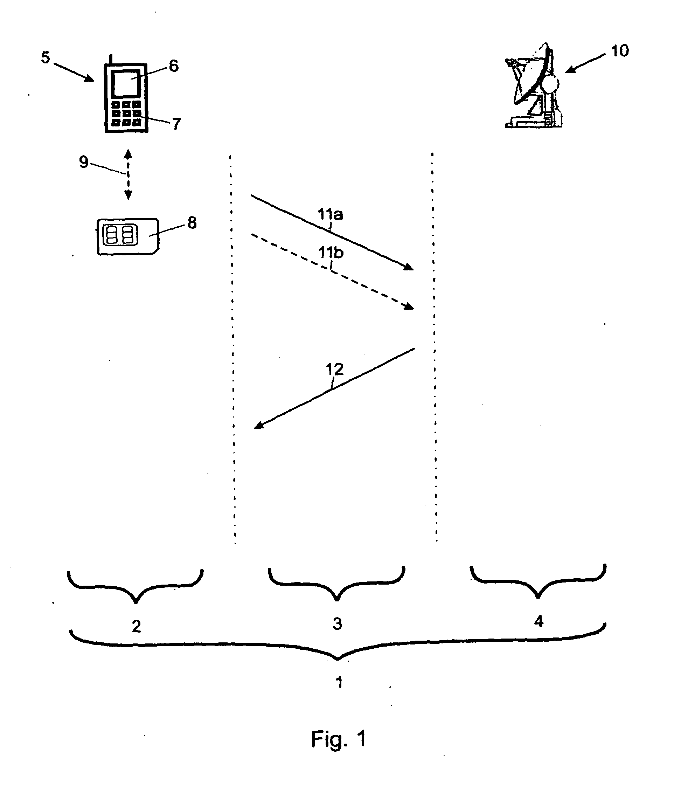

- Fig. 1: in einer schematischen Prinzipdarstellung ein Ausführungsbeispiel eines erfindungsgemäßen Verfahrens zur Konfiguration von mobilen Endgeräten
in Mobilfunknetzen zur Aktivierung von Funktionalitäten eines mobilen Endgerätes zur Nutzung von auswählbaren Mobilfunknetzdiensten eines Mobilfunknetzbetreibers.

Fig. 1 zeigt den prinzipiellen Ablauf einer erfindungsgemäßen Konfiguration von mobilen Endgeräten 5, vorliegend einem Mobilfunktelefon, in Mobilfunknetzen 1 zur Aktivierung von Funktionalitäten eines mobilen Endgerätes 5 zur Nutzung von auswählbaren Mobilfunknetzdiensten 1, wie SMS, MMS, WAP, IM, Rufnummer des Anrufbeantworters, eines Mobilfunknetzbetreibers 10. In Fig. 1 ist das Mobilfunknetz 1 aufgeteilt in eine mobile Endgeräte 5 verwendende Nutzerseite 2, den Übertragungskanal 3 und die Betreiberseite 4 eines Mobilfunknetzbetreibers 10. Das mobile Endgerät 5 und der Mobilfunknetzbetreiber 10 sind vorliegend nur symbolisch für die Nutzerseite 2 und die Betreiberseite 4 des Mobilfunknetzes 1 dargestellt. Insbesondere stellt die mit 10 gekennzeichnete Antenne vorliegend symbolisch betreiber- und übertragungskanalseitig vorhandene Komponenten des Mobilfunknetzes 1 dar, die hier aus Gründen der Übersichtlichkeit nicht dargestellt sind.

Zur Konfiguration des mobilen Endgerätes 5 wird von diesem eine Aktivierungsanforderung, welche in Fig. 1 durch die mit den Bezugszeichen 11a und 11 b gekennzeichneten Pfeile dargestellt ist, an den Mobilfunknetzbetreiber 10 über den Übertragungskanal 3 des Mobilfunknetzes 1 übertragen, vorliegend mittels eines Kurzmitteilungsdienstes (SMS) des Mobilfunknetzes 1. Die Aktivierungsanforderung 11a und 11b enthält dabei das mobile Endgerät 5 identifizierende Daten 11a, vorliegend die Gerätekennung des mobilen Endgerätes 5, die sogenannte IMEI, und den Nutzer des mobilen Endgerätes 5 identifizierende Daten 11 b, vorliegend die dem Nutzer von dem Mobilfunknetzbetreiber zugeordnete mobilfunknetzspezifische Ruf-Nummer, die sogenannte MSISDN oder zumindest die Mobilfunkteilnehmerkennung, die sogenannte IMSI. Bei der vorliegend mit den Bezugszeichen 11a und 11 b getrennt dargestellten Aktivierungsanforderung 11a und 11 b handelt es sich um eine Nachricht und nicht um zwei voneinander getrennte Nachrichten an das bzw. im Mobilfunknetzwerk. Die das mobile Endgerät 5 identifizierenden Daten (IMEI) 11a und die den Nutzer des mobilen Endgerätes 5 identifizierenden Daten (MSISDN oder IMSI) 11 b werden dabei unter Verwendung einer seitens des für den bestimmungsgemäßen Betrieb eines mobilen Endgerätes 5 in einem Mobilfunknetz 1 erforderlichen kartenförmigen Mobilfunkteilnehmer-Identifikations-Moduls 8, einer sogenannten SIM-Karte bzw. USIM-Karte gespeicherten Anwendung, welche vorliegend auf der SIM-Karte bzw. USIM-Karte 8 ausführbar ist, extrahiert.

Die Extrahierungs-Anwendung ist vorliegend eine Mobilfunkteilnehmer-Identifikations-Modul-Anwendung, eine sogenannte SAT (SIM Application Toolkit) oder eine JAVA-Anwendung eines JAVA-fähigen Mobilfunkteilnehmer-Identifikationsmoduls (JAVA-SIM-Karte), welche mittels eines entsprechenden Auswahlmenüs bzw. eines Menüpunktes seitens der Bedienerführung des mobilen Endgerätes 5 ausführbar ist. Dazu weist das auf dem als Ausgabeeinrichtung dienenden Display 6 des mobilen Endgerätes 5 anzeigbare Auswahlmenü des mobilen Endgerätes 5 einen entsprechend auswählbaren Menüpunkt "Konfiguration" auf, der vorliegend derart ausgestaltet bzw. ausgebildet ist, dass der Nutzer die Aktivierungsanforderung 11 a und 11 b mit nur einer Tasteneingabe seitens der als Eingabeeinrichtung dienenden Tastatur 7 des mobilen Endgerätes 5 an den Mobilfunknetzbetreiber 10 senden kann.

In Fig. 1 sind der für einen bestimmungsgemäßen Betrieb des mobilen Endgerätes 5 in dem Mobilfunknetz 1 erforderliche Einsatz der SIM-Karte bzw. USIM-Karte 8 in dem mobilen Endgerät 5 als auch der im Rahmen der Extrahierung der Identifizierungsdaten (IMEI 11a und MSISDN 11 b) für die Aktivierungsanforderung erforderliche Datenaustausch zwischen dem mobilen Endgerät 5 und der SIM-Karte bzw. USIM-Karte 8 symbolisch durch den mit 9 gekennzeichneten Pfeil dargestellt.

Nach Erhalt der Aktivierungsanforderung 11a und 11 b seitens des Mobilfunknetzbetreibers 10 werden von diesem Konfigurationsinformationen 12 zur Aktivierung von Funktionalitäten des mobilen Endgerätes 5 zur Nutzung von entsprechend der von dem Nutzer ausgewählten Mobilfunknetzdienste des Mobilfunknetzbetreibers 10 auf das mobile Endgerät 5 übertragen und dieses entsprechend funktionalisiert.

Das in der Figur der Zeichnung dargestellte Ausführungsbeispiel dient lediglich der Erläuterung der Erfindung und ist für diese nicht beschränkend.

### Bezugszeichenliste

- 1: Mobilfunknetz
- 2: Nutzerseite (Mobilfunknetz (1))
- 3: Übertragungskanal (Mobilfunknetz (1 ))
- 4: Betreiberseite (Mobilfunknetz (1 ))
- 5: mobiles Endgerät/Mobilfunktelefon
- 6: Ausgabeeinrichtung/Display (mobiles Endgerät (5))
- 7: Eingabeeinrichtung/Tastatur (mobiles Endgerät (5))
- 8: kartenförmiges Mobilfunkteilnehmer-Identifikations-Modul/SIM-Karte bzw. USIM-Karte
- 9: Einsetzen/Datenaustausch SIM-Karte bzw. USIM-Karte (8) in/zwischen mobiles Endgerät (5)
- 10: Mobilfunknetzbetreiber
- 11 a: Aktivierungsanforderung/endgerätidentifizierende Daten
- 11 b: Aktivierungsanforderung/nutzeridentifizierende Daten
- 12: Konfigurationsinformationen

## Patentansprüche

1. Verfahren zur Konfiguration von mobilen Endgeräten (5) in Mobilfunknetzen (1) zur Aktivierung von Funktionalitäten eines mobilen Endgerätes (5) zur Nutzung von auswählbaren Mobilfunknetzdiensten eines Mobilfunknetzbetreibers (10), wobei nach einer mittels eines Mobilfunknetzdienstes über ein Mobilfunknetz (1) von dem mobilen Endgerät (5) an einen Mobilfunknetzbetreiber (10) gerichteten Aktivierungsanforderung (11a und 11b), welche das mobile Endgerät (5) identifizierende Daten (11a) und den Nutzer des mobilen Endgerätes (5) identifizierende Daten (11b) enthält, über das Mobilfunknetz (1) von dem Mobilfunknetzbetreiber (10) Konfigurationsinformationen (12) zur Aktivierung von Funktionalitäten des mobilen Endgerätes (5) zur Nutzung von entsprechend der Aktivierungsanforderung (11a und 11b) ausgewählter Mobilfunknetzdienste des Mobilfunknetzbetreibers (10) auf das mobile Endgerät (5) übertragen werden und das mobile Endgerät (5) entsprechend der Aktivierungsanforderung (11a und 11b) funktionalisiert wird, wobei die den Nutzer des mobilen Endgerätes (5) ideritifizierenden Daten aus dem dem Nutzer von dem Mobilfunknetzbetreiber (10) zur Verfügung gestellten kartenförmigen Mobilfunkteilnehmer-Identifikations-Modul, SIM-Karte bzw. USIM-Karte (8), extrahiert werden,
**dadurch gekennzeichnet, dass**
die Extrahierung der Daten (11a, 11b) unter Verwendung einer Anwendung seitens des kartenförmigen Mobilfunkteilnehmer-Identifikations-Moduls, SIM-Karte bzw. USIM-Karte (8), erfolgt.

2. Verfahren nach Anspruch 1, **dadurch gekennzeichnet, dass** die Anwendung von dem kartenförmigen Mobilfunkteilnehmer-Identifikations-Modul, SIM-Karte bzw. USIM-Karte (8), ausgeführt wird.

3. Verfahren nach Anspruch 1 oder Anspruch 2, **dadurch gekennzeichnet, dass** die Anwendung eine Mobilfunkteilnehmer-Identifikations-Modul-Anwendung, SAT, SIM Application Toolkit, ist.

4. Verfahren nach einem der Ansprüche 1 bis 3, **dadurch gekennzeichnet, dass** das kartenförmige Mobilfunkteilnehmer-Identifikations-Modul, SIM-Karte bzw. USIM-Karte (8), JAVA-fähig ist, JAVA-SIM-Karte.

5. Verfahren nach einem der Ansprüche 1 bis 4, **dadurch gekennzeichnet, dass** dieses bei einem Wechsel des Mobilfunknetzbetreibers (10) angewendet wird.

6. Verfahren nach einem der Ansprüche 1 bis 5, **dadurch gekennzeichnet, dass** dieses bei einem Wechsel des mobilen Endgerätes (5) angewendet wird.

7. Verfahren nach einem der Ansprüche 1 bis 6, **dadurch gekennzeichnet, dass** die das mobile Endgerät (5) identifizierenden Daten (11a) zumindest die Gerätekennung, IMEI des mobilen Endgerätes (5) beinhalten.

8. Verfahren nach einem der Ansprüche 1 bis 7, **dadurch gekennzeichnet, dass** die den Nutzer des mobilen Endgerätes (5) identifizierenden Daten (11a) zumindest die dem Nutzer von einem Mobilfunknetzbetreiber (10) zugeordnete netzspezifische Ruf-Nummer, MSISDN, oder zumindest die Mobilfunkteilnehmerkennung, IMSI, beinhalten.

9. Verfahren nach einem der Ansprüche 1 bis 8, **dadurch gekennzeichnet, dass** die Aktivierungsanforderung (11 a und 11b) mittels eines Kurzmitteilungsdienstes, SMS, über ein Mobilfunknetz (1) von dem mobilen Endgerät (5) an einen Mobilfunknetzbetreiber (10) übertragen wird.

10. Verfahren nach einem der Ansprüche 1 bis 8, **dadurch gekennzeichnet, dass** die Aktivierungsanforderung (11a und 11b) mittels eines Multimedia-Mitteilungsdienstes, MMS über ein Mobilfunknetz (1) von dem mobilen Endgerät (5) an einen Mobilfunknetzbetreiber (10) übertragen wird.

11. Verfahren nach einem der Ansprüche 1 bis 8, **dadurch gekennzeichnet, dass** die Aktivierungsanforderung (11a und 11b) mittels einer Spracheingabe an einen Mobilfunknetzbetreiber (10) übertragen wird.

12. Verfahren nach einem der Ansprüche 1 bis 11, **dadurch gekennzeichnet, dass** die Konfigurationsinformationen (12) mittels eines Kurzmitteilungsdienstes, SMS, über ein Mobilfunknetz (1) von dem Mobilfunknetzbetreiber (10) an das mobile Endgerät (5) übertragen werden.

13. Verfahren nach einem der Ansprüche 1 bis 11, **dadurch gekennzeichnet, dass** die Konfigurationsinformationen (12) mittels eines Multimedia-Mitteilungsdienstes, MMS, über ein Mobilfunknetz (1) von dem Mobilfunknetzbetreiber (10) an das mobile Endgerät (5) übertragen werden.

14. Verfahren nach einem der Ansprüche 1 bis 13, **dadurch gekennzeichnet, dass** die Konfigurationsinformationen (12) das mobile Endgerät (5) zur Nutzung von Kurzmitteilungsdiensten, SMS, des Mobilfunknetzbetreibers (10) funktionalisieren.

15. Verfahren nach einem der Ansprüche 1 bis 13, **dadurch gekennzeichnet, dass** die Konfigurationsinformationen (12) das mobile Endgerät (5) zur Nutzung von Multimedia-Mittelungsdiensten, MMS, des Mobilfunknetzbetreibers (10) funktionalisieren.

16. Verfahren nach einem der Ansprüche 1 bis 13, **dadurch gekennzeichnet, dass** die Konfigurationsinformationen (12) das mobile Endgerät (5) zur Nutzung von Instant-Messaging-Mitteilungsdiensten, IM, des Mobilfunknetzbetreibers (10) funktionalisieren.

17. Verfahren nach einem der Ansprüche 1 bis 13, **dadurch gekennzeichnet, dass** die Konfigurationsinformationen (12) das mobile Endgerät (5) zur Nutzung von WAP-Diensten des Mobilfunknetzbetreibers (10) funktionalisieren.

18. Verfahren nach einem der Ansprüche 1 bis 17, **dadurch gekennzeichnet, dass** das mobile Endgerät (5) ein Mobilfunktelefon ist.

19. Mobiles Endgerät (5) zur Nutzung in Mobilfunknetzen (1), **dadurch gekennzeichnet, dass** dieses zur Ausführung eines Verfahrens nach einem der Ansprüche 1 bis 18 ausgebildet ist.

20. Mobiles Endgerät (5) nach Anspruch 19, **dadurch gekennzeichnet, dass** dieses ein Mobilfunktelefon ist.

## Claims

1. A method for configuring mobile terminals (5) in mobile networks (1) for activating functionalities of a mobile terminal (5) for the use of selectable mobile network services of a mobile network provider (10), wherein after an activation request (11 a and 11b) addressed by the mobile terminal (5) via a mobile network (1) by means of a mobile network service to a mobile network provider (10), the activation request comprising data (11a) that identify the mobile terminal and data (11b) that identify the user of the mobile terminal, configuration information (12) is transmitted by the mobile network provider (10) via the mobile network (1) to the mobile terminal (5) for activating functionalities of the mobile terminal (5) for using mobile network services of the mobile network provider (10), which services have been selected according to the activation request (11a and 11b), and the mobile terminal (5) is functionalized according to the activation request (11 a and 11b), wherein the data that identify the user of the mobile terminal (5) will be extracted from the card-shaped mobile radiotelephone subscriber identification module, SIM card or USIM card (8), made available to the user by the mobile network provider (10),
**characterized in that**
the extraction of the data (11 a, 11b) is realized using an application of the card-shaped mobile radiotelephone subscriber identification module, SIM card or USIM card (8).

2. A method according to claim 1, **characterized in that** the application is executed by the card-shaped mobile radiotelephone subscriber identification module, the SIM card or USIM card (8).

3. A method according to claim 1 or claim 2, **characterized in that** the application is a mobile radiotelephone subscriber identification module application, SAT, SIM Application Toolkit.

4. A method according to one of the claims 1 through 3, **characterized in that** the card-shaped mobile radiotelephone subscriber identification module, SIM card or USIM card (8), is JAVA able, JAVA SIM card.

5. A method according to one of the claims 1 through 4, **characterized in that** this one will be used if the mobile network provider (10) is changed.

6. A method according to one of the claims 1 through 5, **characterized in that** this one will be used if the mobile terminal (5) is changed.

7. A method according to one of the claims 1 through 6, **characterized in that** the data (11a) identifying the mobile terminal at least comprise the terminal identification, IMEI, of the mobile terminal (5).

8. A method according to one of the claims 1 through 7, **characterized in that** the data (11b) identifying the user of the mobile terminal (5) at least comprise the network specific call number, MSISDN, that has been allocated to the user by a mobile network provider or at least the mobile radiotelephone subscriber identification, IMSI.

9. A method according to one of the claims 1 through 8, **characterized in that** the activation request (11 a and 11b) will be transmitted from the mobile terminal (5) to a mobile network provider (10) by means of a short messaging service, SMS, via a mobile network (1).

10. A method according to one of the claims 1 through 8, **characterized in that** the activation request (11 a and 11b) will be transmitted from the mobile terminal (5) to a mobile network provider (10) by means of a multimedia messaging service, MMS, via a mobile network (1).

11. A method according to one of the claims 1 through 8, **characterized in that** the activation request (11a and 11b) will be transmitted to a mobile network provider (10) by means of a voice entry.

12. A method according to one of the claims 1 through 11, **characterized in that** the configuration information (12) will be transmitted from the mobile network provider (10) to the mobile terminal (5) by means of a short messaging service, SMS, via a mobile network (1).

13. A method according to one of the claims 1 through 11, **characterized in that** the configuration information (12) will be transmitted from the mobile network provider (10) to the mobile terminal (5) by means of a multimedia messaging service, MMS, via a mobile network (1).

14. A method according to one of the claims 1 through 13, **characterized in that** the configuration information (12) functionalizes the mobile terminal (5) for using short messaging services, SMS, of the mobile network provider (10).

15. A method according to one of the claims 1 through 13, **characterized in that** the configuration information (12) functionalizes the mobile terminal (5) for using multimedia messaging services, MMS, of the mobile network provider (10).

16. A method according to one of the claims 1 through 13, **characterized in that** the configuration information (12) functionalizes the mobile terminal (5) for using instant messaging services, IM, of the mobile network provider (10).

17. A method according to one of the claims 1 through 13, **characterized in that** the configuration information (12) functionalizes the mobile terminal (5) for using WAP services of the mobile network provider (10).

18. A method according to one of the claims 1 through 17, **characterized in that** the mobile terminal (5) is a mobile phone.

19. A mobile terminal (5) for the use in mobile networks (1), **characterized in that** this one is adapted to carry out a method according to one of the claims 1 through 18.

20. A mobile terminal (5) according to claim 19, **characterized in that** this one is a mobile phone.

## Revendications

1. Procédé de configuration des terminaux mobiles (5) dans des réseaux mobiles (1) pour activer des fonctionnalités d'un terminal mobile (5) pour utiliser des services de réseau mobile à sélectionner d'un fournisseur de réseau mobile (10), dans lequel après une demande d'activation (11a et 11b) adressée du terminal mobile (5) via un réseau mobile (1) par moyen d'un service de réseau mobile à un fournisseur de réseau mobile (10), la demande d'activation contenant des données (11a) identifiant le terminal mobile (5) et des données (11b) identifiant l'utilisateur du terminal mobile (5), des informations de configuration (12) sont transmises du fournisseur de réseau (10) via le réseau mobile (1) au terminal mobile (5) pour activer des fonctionnalités du terminal mobile (5) pour utiliser des services de réseau mobile du fournisseur de réseau mobile (10) sélectionnés au fur et à mesure de la demande d'activation (11 a et 11b) et le terminal mobile (5) est fonctionnalisé selon la demande d'activation (11a et 11b), les données identifiant l'utilisateur du terminal mobile (5) étant extraites du module d'identification d'abonné de radiotéléphonie sous forme de carte, la carte SIM ou la carte USIM (8), et mis à la disposition de l'utilisateur par le fournisseur de réseau mobile (10),
**caractérisé en ce que**
les données (11a, 11b) sont extraites en utilisant une application du module d'identification d'abonné de radiotéléphonie sous forme de carte, la carte SIM ou la carte USIM (8).

2. Procédé selon la revendication 1, **caractérisé en ce que** l'application est réalisée par le module d'identification d'abonné de radiotéléphonie sous forme de carte, la carte SIM ou la carte USIM (8).

3. Procédé selon la revendication 1 ou la revendication 2, **caractérisé en ce que** l'application est une application de module d'identification d'abonné de radiotéléphonie, SAT, SIM Application Toolkit.

4. Procédé selon l'une des revendications 1 à 3, **caractérisé en ce que** le module d'identification d'abonné de radiotéléphonie sous forme de carte, la carte SIM ou la carte USIM (8) est capable de JAVA, la carte SIM JAVA.

5. Procédé selon l'une des revendications 1 à 4, **caractérisé en ce qu'**on utilise celui-ci au cas de changement du fournisseur de réseau mobile (10).

6. Procédé selon l'une des revendications 1 à 5, **caractérisé en ce qu'**on utilise celui-ci au cas de changement du terminal mobile (5).

7. Procédé selon l'une des revendications 1 à 6, **caractérisé en ce que** les données (11a) identifiant le terminal mobile (5) comprennent au moins l'identification d'appareil, l'IMEI, du terminal mobile (5).

8. Procédé selon l'une des revendications 1 à 7, **caractérisé en ce que** les données (11b) identifiant l'utilisateur du terminal mobile (5) comprennent au moins le numéro d'abonné spécifique du réseau et attribué à l'utilisateur par un fournisseur de réseau mobile (10), i.e. le MSISDN, ou au moins l'identification d'abonné de radiotéléphonie, l'IMSI.

9. Procédé selon l'une des revendications 1 à 8, **caractérisé en ce que** la demande d'activation (11a et 11b) est transmise du terminal mobile (5) à un fournisseur de réseau mobile (10) via un réseau mobile par moyen d'un service de messages courts, SMS.

10. Procédé selon l'une des revendications 1 à 8, **caractérisé en ce que** la demande d'activation (11a et 11b) est transmise du terminal mobile (5) à un fournisseur de réseau mobile (10) via un réseau mobile par moyen d'un service de messages multimédia, MMS.

11. Procédé selon l'une des revendications 1 à 8, **caractérisé en ce que** la demande d'activation (11 a et 11b) est transmise à un fournisseur de réseau mobile (10) par moyen d'une entrée par voix.

12. Procédé selon l'une des revendications 1 à 11, **caractérisé en ce que** les informations de configuration (12) sont transmises du fournisseur de réseau mobile (10) au terminal mobile (5) via un réseau mobile par moyen d'un service de messages courts, SMS.

13. Procédé selon l'une des revendications 1 à 11, **caractérisé en ce que** les informations de configuration (12) sont transmises du fournisseur de réseau mobile (10) au terminal mobile (5) via un réseau mobile par moyen d'un service de messages multimédia, MMS.

14. Procédé selon l'une des revendications 1 à 13, **caractérisé en ce que** les informations de configuration (12) fonctionnalisent le terminal mobile (5) pour utiliser des services de messages courts, SMS, du fournisseur de réseau mobile (10).

15. Procédé selon l'une des revendications 1 à 13, **caractérisé en ce que** les informations de configuration (12) fonctionnalisent le terminal mobile (5) pour utiliser des services de messages multimédia, MMS, du fournisseur de réseau mobile (10).

16. Procédé selon l'une des revendications 1 à 13, **caractérisé en ce que** les informations de configuration (12) fonctionnalisent le terminal mobile (5) pour utiliser des services de messagerie instantanée, IM, du fournisseur de réseau mobile (10).

17. Procédé selon l'une des revendications 1 à 13, **caractérisé en ce que** les informations de configuration (12) fonctionnalisent le terminal mobile (5) pour utiliser des services de WAP du fournisseur de réseau mobile (10).

18. Procédé selon l'une des revendications 1 à 17, **caractérisé en ce que** le terminal mobile (5) est un téléphone mobile.

19. Terminal mobile (5) pour l'utilisation dans des réseaux mobiles (1), **caractérisé en ce que** celui-ci est adapté pour l'exécution d'un procédé selon l'une des revendications 1 à 18.

20. Terminal mobile (5) selon la revendication 19, **caractérisé en ce que** celui-ci est un téléphone mobile.
